# EUROPÄISCHE PATENTANMELDUNG

(11) **EP 1 717 935 A2**
(43) Veröffentlichungstag der Anmeldung: **02.11.2006**
(21) Anmeldenummer: 06008327.6
(22) Anmeldetag: 21.04.2006
(51) Int. Cl.: H02K 29/08

(54) **Elektrische Maschine**

(30) Priorität: 28.04.2005 DE 102005019788
(71) Anmelder: LuK Lamellen und Kupplungsbau Beteiligungs KG, 77815 Bühl (DE)
(72) Erfinder: Hill, Wolfgang, 76135 Karlsruhe (DE)

(57) **Zusammenfassung**

Eine elektrische Maschine ist als Scheibenläufer mit einem relativ zu einem Primärteil um eine Rotationsachse verdrehbar gelagerten Sekundärteil ausgebildet. Das Sekundärteil hat eine Magnetscheibe, die an ihren axialen Stirnseiten eine in Umfangsrichtung verlaufende Abfolge von abwechselnd in zueinander entgegengesetzte Richtungen magnetisierten permanentmagnetischen Magnetpolen aufweist. Die Magnetpole wirken über mindestens einen axial zwischen dem Primärteil und dem Sekundärteil angeordneten Luftspalt mit einer am Primärteil vorgesehenen Wicklung magnetisch zusammen. Zur Erfassung der Lage des Sekundärteils relativ zum Primärteil ist eine Lagemesseinrichtung vorgesehen, die mindestens einen an dem Primärteil angeordneten Magnetfeldsensor zum Detektieren der Magnetpole aufweist, dieser ist in einem radial außerhalb der Magnetscheibe befindlichen Bereich an dem Stator angeordnet.

## Beschreibung

Die Erfindung betrifft eine elektrische Maschine, die als Scheibenläufer mit einem relativ zu einem Primärteil um eine Rotationsachse verdrehbar gelagerten Sekundärteil ausgebildet ist, wobei das Sekundärteil eine Magnetscheibe aufweist, die an ihren axialen Stirnseiten eine in Umfangsrichtung verlaufende Abfolge von abwechselnd in zueinander entgegengesetzte Richtungen magnetisierten permanentmagnetischen Magnetpolen aufweist, die über mindestens einen axial zwischen dem Primärteil und dem Sekundärteil angeordneten Luftspalt mit einer am Primärteil vorgesehenen Wicklung magnetisch zusammenwirken, und mit einer Lagemesseinrichtung zur Erfassung der Lage des Sekundärteils relativ zum Primärteil, wobei die Lagemesseinrichtung mindestens einen an dem Primärteil angeordneten Magnetfeldsensor zum Detektieren der Magnetpole aufweist. Dabei wird unter einer Rotationsachse eine mechanische Achse oder eine gedachte Gerade verstanden, um die das Primärteil und das Sekundärteil relativ zueinander verdrehbar sind.

Eine derartige elektrische Maschine, bei der die Magnetpole von einer auf einer Welle angeordneten Magnetscheibe gebildet werden, die als Zwischenläufer zwischen zwei Statorhälften angeordnet ist, ist aus der Praxis bekannt. In Umfangsrichtung wechseln entgegengesetzt zueinander magnetisierte Magnetpole einander ab. Zwischen der Magnetscheibe und den Statorhälften ist beidseits der Magnetscheibe jeweils ein axial von einem Magnetfluss durchsetzter Luftspalt angeordnet. Der Stator hat einen weichmagnetischen Kern mit Nuten, die mit Wicklungsspulen bewickelt sind. In den Nuten sind Magnetfeldsensoren für eine Lagemesseinrichtung angeordnet, die zur Erfassung der Lage des Sekundärteils relativ zum Primärteil vorgesehen ist. In Abhängigkeit von einem mit Hilfe der Lagemesseinrichtung erfassten Lagemesssignal wird die Wicklung über eine Endstufe elektronisch kommutiert. Die elektrische Maschine hat den Nachteil, dass die Nuten relativ breit sind, damit der für die Magnetfeldsensoren benötigte Bauraum zur Verfügung steht. Die elektrische Maschine weist deshalb noch relativ große Abmessungen auf.

Aus der Praxis kennt man auch bereits eine gattungsfremde, als Scheibenläufer ausgebildeten elektrische Maschine, die als Lagemesseinrichtung einen Tachogenerator aufweist, der in Axialrichtung neben der aus dem Primärteil und dem Sekundärteil gebildeten Anordnung vorgesehen ist. Die elektrische Maschine weist in axialer Richtung relativ große Länge auf.

Es besteht deshalb die Aufgabe, eine elektrische Maschine der eingangs genannten Art zu schaffen, die eine kompakte Abmessungen und eine kurze Bauform ermöglicht.

Diese Aufgabe wird erfindungsgemäß dadurch gelöst, dass der mindestens eine Magnetfeldsensor in einem radial außerhalb der Magnetscheibe befindlichen Bereich ortsfest zum Stator angeordnet ist.

In vorteilhafter Weise können dadurch die Nutschlitze des Primärteils relativ schmal ausgebildet sein, was kompakte Abmessungen der elektrischen Maschine ermöglicht. Da der mindestens eine Magnetfeldsensor radial außerhalb der Magnetscheibe vorgesehen ist, ermöglicht die elektrische Maschine außerdem eine kurze Bauform. Dank der Positionierung des Magnetfeldsensors radial weit außen, bewirken Montagetoleranzen des Magnetfeldsensors nur relativ kleine Messfehler.

Bei einer bevorzugten Ausführungsform der Erfindung weist das Sekundärteil beidseits der Magnetscheibe an deren axialen Stirnseiten magnetisch leitfähige Deckbleche auf der Magnetscheibe auf, die radial über den Außenumfang der Magnetscheibe vorstehende, jeweils einem Magnetpol zugeordnete Zähne haben, die beim Verdrehen des Sekundärteils relativ zu dem Primärteil axial beidseits an dem mindestens einen Magnetfeldsensor vorbeilaufen. Durch die Magnetscheibe wird einerseits eine gewisse Abschirmung des mindestens einen Magnetfeldsensors gegen ein beim Bestromen der Wicklung des Primärteils auftretendes magnetisches Störfeld erreicht, und andererseits wird ein Teil des von den Magnetpolen der Magnetscheibe erzeugten Magnetflusses über die Zähne gezielt zu dem Magnetfeldsensor geleitet. Beim Vorbeilaufen der Zähne am Magnetfeldsensors ergibt sich dann eine deutliche Änderung der vom Sensor erfassten Flussdichte, die zur Lagemessung ausgewertet werden kann. Die dünnen Deckbleche bestehen vorzugsweise aus einem weichmagnetisch hochpermeablen Werkstoff.

Vorteilhaft ist, wenn jeweils zwei paarweise einander zugeordnete Zähne unterschiedlicher Deckbleche in axialer Richtung hintereinander angeordnet sind. Das Vorbeilaufen der Zähne an dem Magnetfeldsensor kann dann anhand des Lagemesssignals noch störungsfreier detektiert werden. Die tangentiale Breite der Zähne kann variieren, entspricht jedoch vorzugsweise der Polteilung minus einer kleinen Schlitzbreite oder einem Bruchteil der Polteilung.

Bei einer zweckmäßigen Ausgestaltung der Erfindung weist mindestens ein Deckblech zumindest im Bereich der Zähne einen von einer Ebene abweichenden Verlauf auf, der derart gewählt ist, dass die lichte Weite zwischen den paarweise einander zugeordneten Zähnen kleiner ist als der Abstand der Deckbleche im Bereich der Magnetscheibe. Der mindestens eine Magnetsensor weist in diesem Fall eine geringere Dicke auf als die Magnetscheibe.

Bei einer bevorzugten Ausführungsform der Erfindung weisen die Deckbleche im Übergangsbereich zwischen zwei zueinander benachbarten ungleichnamigen Magnetpolen der Magnetscheibe mindestens eine Unterbrechung und/oder Reduzierung ihrer Wandstärke auf. Die Deckbleche haben dann im Übergangsbereich zwischen zueinander benachbart aneinander angrenzenden Magnetpolen einen höheren magnetischen Widerstand als in der Mitte der Magnetpole. Dadurch reduziert sich der Anteil des von der Magnetscheibe erzeugten magnetischen Streuflusses, der über die Deckbleche direkt von einem Magnetpol zu einem dazu benachbarten Magnetpol mit entgegengesetzter Polarität fließt. Die Deckbleche werden bevorzugt als Biegestanzteil hergestellt.

Bei einer vorteilhaften Ausführungsform der Erfindung sind die Unterbrechung(en) und/oder Reduzierung(en) derart angeordnet, dass sie die Deckbleche in Segmente unterteilen. An den Deckblechen tritt dann zwischen den Magnetpolen ein noch geringerer magnetischer Streufluss auf.

Vorteilhaft ist, wenn die Unterbrechung als sich in radialer Richtung erstreckender Schlitz und/oder als in radialer Richtung verlaufende Perforierung ausgebildet ist. Dadurch wird der über die Deckbleche fließende magnetische Streufluss noch weiter reduziert. Durch die Perforierung und/oder die Schlitze sind die Deckbleche in einstückig miteinander verbundene, jeweils einem Magnetpol zugeordnete Segmente unterteilt. Die miteinander verbundenen Segmente lassen sich bei der Fertigung der elektrischen Maschine auf einfache Weise an die Magnetscheibe montieren. Selbstverständlich können die Deckbleche auch mehrteilig ausgebildet sein und mehrere, in Umfangsrichtung durch Zwischenräume voneinander beabstandete Segmente aufweisen.

Bei einer bevorzugten Ausführungsform der Erfindung erstreckt sich zumindest ein Zahn in Umfangsrichtung des Deckblechs über die gesamte Breite des ihm zugeordneten Segments. Beim Vorbeilaufen der Zähne an den Magnetfeldsensoren ergibt sich dann im Bereich der Zahnflanken ein steilflankige Änderung des magnetischen Felds mit einem großen Signalhub. Die an den Magnetfeldsensoren vorbeilaufenden Zähne können dadurch auf einfache Weise zuverlässig detektiert werden.

Bei einer anderen vorteilhaften Ausgestaltung der Erfindung weist zumindest ein Zahn in Umfangsrichtung des Deckblechs eine geringere Breite auf als das ihm zugeordnete Segment, wobei dieser Zahn in Umfangsrichtung vorzugsweise mittig an dem Segment angeordnet ist. Dadurch kann der magnetische Streufluss an dem Deckblech zusätzlich reduziert werden.

Bei einer bevorzugten Ausführungsform der Erfindung bestehen die Deckbleche aus einer weichmagnetischen Legierung, deren Sättigungsflussdichte zwischen 10% und 30% über der Betriebsflussdichte der Magnetscheibe liegt. Hierdurch geht der Werkstoff der Deckbleche im Bereich der Unterbrechungen relativ früh in die Sättigung, so dass die Streuverluste entsprechend gering ausfallen.

Bei einer zweckmäßigen Ausgestaltung der Erfindung weist die Magnetscheibe Permanentmagnete auf, die in eine Vergussmasse eingebettet sind, wobei die mindestens eine Unterbrechung zumindest bereichsweise mit der Vergussmasse befüllt ist. Die Permanentmagnete und die Deckbleche sind dann durch die verfestigte Vergussmasse zu einer mechanisch stabilen Einheit fest miteinander verbunden. Die Vergussmasse ist bevorzugt ein Gießharz. Sie bildet zusammen mit den Deckblechen einen Korrosionsschutz für die Permanentmagnete, der auch widerstandsfähig gegen mögliche Partikel im Luftspalt ist.

Vorteilhaft ist, wenn die Magnetscheibe als Ringscheibe ausgebildet ist, die um ein vorzugsweise als Welle oder Nabenkörper ausgebildetes Trägerteil herum angeordnet ist, wobei mindestens eines der Deckbleche drehfest mit der Magnetscheibe und dem Trägerteil verbunden ist. Beim Beschleunigen und Abbremsen der Magnetscheibe wird dann ein Teil der an der Magnetscheibe auftretenden Beschleunigungskräfte über das mindestens eine Deckblech auf das Trägerteil übertragen, wodurch sich die Scherkräfte in der Vergussmasse insbesondere in dem an die Welle oder den Nabenkörper angrenzenden Randbereich der Vergussmasse entsprechend reduzieren. Zwischen der Magnetscheibe und dem Trägerteil kann dadurch im Vergleich zu einer entsprechenden Anordnung ohne Deckbleche ein höheres Drehmoment langzeitstabil übertragen werden. Die Deckbleche können mit dem Trägerteil verschweißt, verlötet und/oder flächig verklebt sein. Das Trägerteil besteht bevorzugt aus einem nichtmagnetischen Werkstoff, beispielsweise aus Edelstahl, Aluminium, Messing oder einem Faserverbundwerkstoff.

Bei einer bevorzugten Ausführungsform der Erfindung ist mindestens eines der Deckbleche als Ringscheibe ausgebildet, die an ihrem Innenrand eine Verzahnung aufweist, wobei an dem Trägerteil eine mit der Verzahnung im Sinne einer drehfesten Verbindung zusammenwirkende Profilierung vorgesehen ist. Dadurch können Drehmomente noch besser von der Magnetscheibe auf das Trägerteil übertragen werden. Außerdem ermöglicht die Verzahnung bei der Fertigung der elektrischen Maschine eine lagegenaue Positionierung an der Magnetscheibe. Letztere kann eine entsprechende, mit der Profilierung zusammenwirkende Verzahnung aufweisen.

Vorteilhaft ist, wenn die beidseits der Magnetscheibe angeordneten Deckbleche baugleich ausgebildet sind. Die Deckbleche ermöglichen dann eine besonders einfache Montage und eine kostengünstige Serienfertigung.

Vorteilhafterweise ist die Wandstärke der Deckbleche kleiner oder gleich 0,2 mm, insbesondere kleiner oder gleich 0,15 mm und bevorzugt kleiner oder gleich 0,1 mm. Dadurch wird beim Vorbeilaufen eines Magnetpols an dem Magnetfeldsensor ein für die Messung ausreichender Magnetfluss am Magnetfeldsensor erreicht, und dennoch ergeben sich nur geringe magnetische Verluste in dem von dem Magnetfluss zwischen der Magnetschicht und dem Stator durchsetzten Bereich. Außerdem wir durch die relativ dünnen Deckbleche eine geringe Massenträgheit des Sekundärteils ermöglicht.

Nachfolgend sind Ausführungsbeispiele der Erfindung anhand der Zeichnung näher erläutert.
Es zeigen:
- Fig. 1: einen Radialschnitt durch eine als Scheibenläufer ausgebildete elektrische Maschine,
- Fig. 2: einen Querschnitt durch die elektrische Maschine,
- Fig. 3: eine Aufsicht auf ein erstes Ausführungsbeispiel eines Deckblechs,
- Fig. 4: eine Aufsicht auf ein zweites Ausführungsbeispiel eines Deckblechs,
- Fig. 5: einen Teilquerschnitt durch einen Scheibenläufer, der eine Magnetscheibe ohne Deckbleche aufweist,
- Fig. 6: eine graphische Darstellung des Verlaufs eines magnetischen Flusses, der in einem Magnetfeldsensor des in Fig. 5 gezeigten Scheibenläufers erzeugt wird, wobei auf der Abszisse die Drehlage eines Sekundärteils relativ zu einem Primärteil und auf der Ordinate der magnetische Fluss aufgetragen sind, und wobei unterhalb der graphischen Darstellung eine Aufsicht auf die entsprechenden Stellen des Umfangs des Sekundärteils abgebildet ist,
- Fig. 7: als Teilquerschnitt durch einen Scheibenläufer, dessen Deckbleche schmale Zähne aufweist,
- Fig. 8: eine Darstellung ähnlich Fig. 6, für den in Fig. 7 gezeigten Scheibenläufer,
- Fig. 9: einen Teilquerschnitt durch einen Scheibenläufer, dessen Deckbleche breite Zähne haben und
- Fig. 10: eine Darstellung ähnlich Fig. 6, für den in Fig. 9 gezeigten Scheibenläufer.

Ein im Ganzen mit 1 bezeichnete, als Scheibenläufer ausgebildete, elektrische Maschine weist ein Primärteil und ein Sekundärteil auf, die mittels Gleit- oder Wälzlagern 2 um eine gedachte Rotationsachse 3 relativ zueinander verdrehbar gelagert sind. Das Primärteil ist als ortsfester Stator und das Sekundärteil als Rotor oder Läufer ausgebildet.

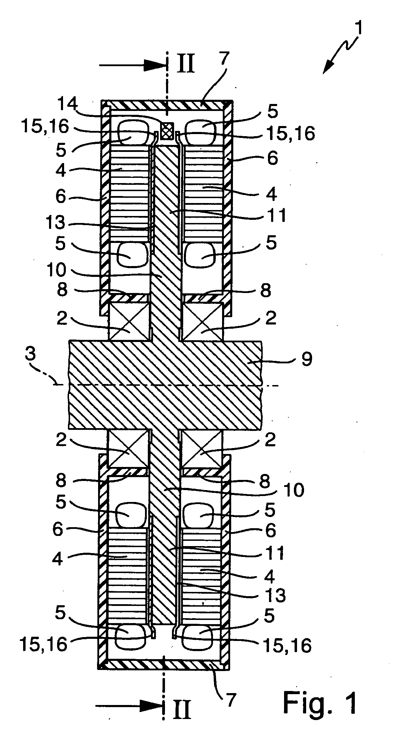

Wie in Fig. 1 besonders gut erkennbar ist, hat das Primärteil zwei Primärteilhälften, die beidseits des Sekundärteils angeordnet sind und dieses zwischen sich einschließen. Das Sekundärteil ist als Zwischenläufer ausgestaltet. Jede Primärteilhälfte hat jeweils einen um die Rotationsachse 3 herum angeordneten weichmagnetischen Statorkern 4 mit radial zur Rotationsachse 3 verlaufenden Nuten, in denen Wicklungsspulen einer Wicklung 5 angeordnet sind. Die Wicklungsspulen ragen mit Wickelköpfen aus den radial inneren und äußeren Enden der Nuten heraus.

Der Statorkern 4 und die Wicklung 5 sind in der Innenhöhlung eines Gehäuses angeordnet, das zwei ringscheibenförmige erste Gehäuseteile 6 aufweist, die an den axialen Stirnseiten der Maschine 1 angeordnet sind. An ihrem Außenrand sind die ersten Gehäuseteile 6 jeweils mit einem Randbereich eines zweiten, etwa zylindrischen Gehäuseteils 7 fest verbunden. Das zweite Gehäuseteil 7 ist zwischen den ersten Gehäuseteilen 6 angeordnet. An die ersten Gehäuseteile 6 ist innenseitig ein konzentrisch zu der Rotationsachse 3 verlaufender Steg 8 angeformt, der gegen einen äußeren Lagerring des Gleit- oder Wälzlagers 2 abgestützt ist. Ein innerer Lagering des Gleit- oder Wälzlagers 2 ist auf einer Welle 9 angeordnet, welche das Primärteil und das Sekundärteil durchsetzt. Zwischen den den einzelnen ersten Gehäuseteilen 6, 7 jeweils zugeordneten, aus dem inneren und äußeren Lagerring gebildeten Lagern, ist ein Nabenkörper 10 angeordnet, der eine ringförmige Magnetscheibe 11 trägt. Die Magnetscheibe 11 erstreckt sich in einer Ebene, die normal zu der Rotationsachse 3 verläuft. In dem Fig. 1 gezeigten Radialschnitt durch eine die Rotationsachse enthaltende Ebene ist erkennbar, dass die Magnetscheibe 11 den Nabenkörper 10 in radialer Richtung in gerader Verlängerung fortsetzt.

Die Magnetscheibe 6 weist mehrere in Umfangsrichtung der Magnetscheibe 6 gleichmäßig verteilte Permanentmagnete 12 auf, die parallel zur Rotationsachse 3 magnetisiert sind und an den einander angewandten axialen Stirnseiten der Magnetscheibe 6 eine Anzahl von Magnetpolen bilden. Dabei sind in Umfangsrichtung zueinander benachbarte Magnetpole in zueinander entgegengesetzte Richtungen magnetisiert, d.h. in Umfangsrichtung wechseln Nord- und Südpole einander ab. Die Magnetpole wirken in an sich bekannter Weise magnetisch über Luftspalte 13, die in Axialrichtung jeweils zwischen der Magnetscheibe 6 und den Statorkernen 4 angeordnet sind, mit der Wicklung 5 zusammen.

Zur Erfassung der Lage des Sekundärteils relativ zum Primärteil weist die elektrische Maschine 1 eine Lagemesseinrichtung auf. Die Lagemesseinrichtung hat mehrere Magnetfeldsensoren 14, die zum Detektieren des von den Permanentmagneten 12 erzeugten Magnetfelds jeweils an einer Stelle angeordnet sind, die in gerader radialer Verlängerung der Magnetscheibe 6 außerhalb dieser angeordnet ist. In Fig. 1 ist deutlich erkennbar, dass die Magnetfeldsensoren 14 der Außenmantelfläche der Magnetscheibe 6 gegenüberliegend angeordnet und durch einen schmalen Spalt radial von dieser beabstandet sind. Außerdem ist erkennbar, dass die Magnetfeldsensoren 14 innenseitig an dem zweiten Gehäuseteil 7 positioniert, also ortsfest zum Stator angeordnet sind. Die Magnetfeldsensoren 14 sind auf einem an dem zweiten Gehäuseteil 7 angeordneten Keramikplättchen montiert, welches die Magnetfeldsensoren 14 gut wärmeleitend mit dem zweiten Gehäuseteil 7 verbindet. In den radial äußeren Wickelköpfen der Wicklung verteilt sich die in den Wickelköpfen auftretende Verlustwärme auf eine größere Fläche als bei den radial inneren Wickelköpfen. Dadurch und durch die gute Wärmeableitung zum Gehäuse ist die Wärmebelastung der Magnetfeldsensoren 14 gering.

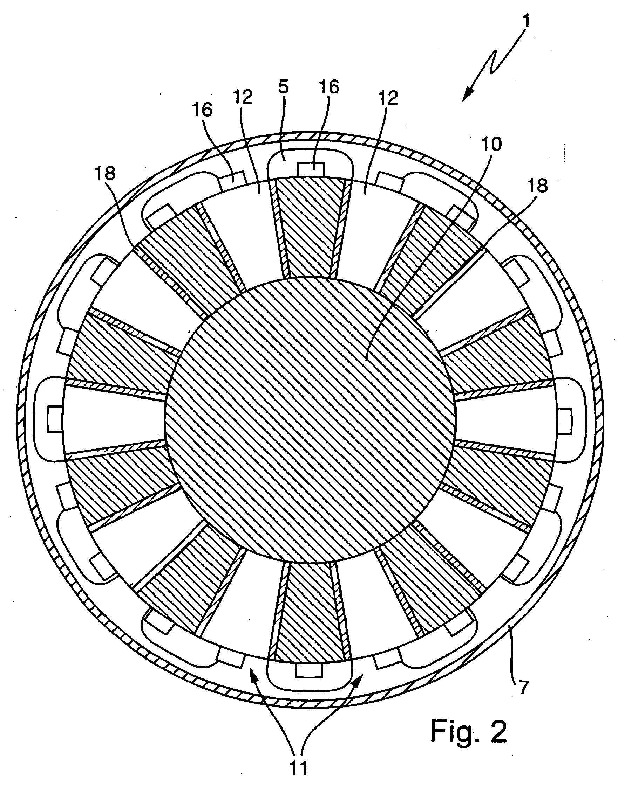

Bei den in Fig. 1 bis 3 und 7 bis 9 gezeigten Ausführungsbeispielen hat das Sekundärteil beidseits der Magnetscheibe 6 an deren axialen Stirnseiten jeweils ein ringscheibenförmiges, magnetisch leitfähiges Deckblech 15, das direkt auf der Magnetscheibe 6 angeordnet ist. In Fig. 2 ist erkennbar, dass die Deckbleche 15 radial über den Außenumfang der Magnetscheibe 6 vorstehende, jeweils einem Magnetpol zugeordnete Zähne 16 haben, die in Umfangsrichtung jeweils etwa mittig zu dem betreffenden Magnetpol angeordnet sind. Der Überstand der Zähne beträgt nur wenige Millimeter, vorzugsweise sogar unter einem Millimeter.

Jeweils zwei paarweise einander zugeordnete Zähne unterschiedlicher Deckbleche 15 sind in axialer Richtung hintereinander angeordnet. Die paarweise einander zugeordneten Zähne 16 weisen jeweils eine unterschiedliche magnetische Polarität auf, so dass der zwischen diesen Zähnen 16 gebildete Zwischenraum etwa parallel zur Rotationsachse 3 von einem Teil des von dem dazu benachbarten Permanentmagneten 12 erzeugten Magnetflusses durchflutet wird. Beim Verdrehen des Sekundärteils relativ zu dem Primärteil laufen die paarweise einander zugeordneten Zähne 16 axial beidseits an den Magnetfeldsensoren 14 vorbei.

In Fig. 1 ist erkennbar, dass die Zähne 16 - jeweils ausgehend von ihrem freien Ende in radialer Richtung zur Rotationsachse hin - einen stufenförmigen Verlauf aufweisen. Dabei ist die lichte Weite zwischen den jeweils einander zugeordneten, axial einander gegenüberliegenden Zähnen 16 kleiner als der axiale Abstand der Deckbleche 15 im Bereich der Magnetscheibe 6.

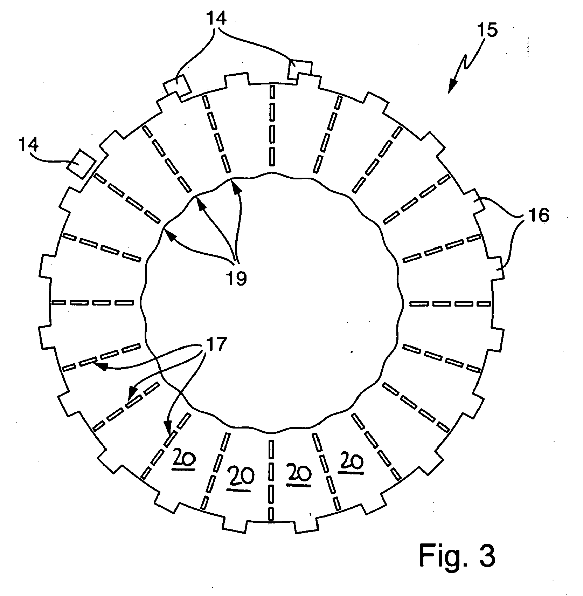

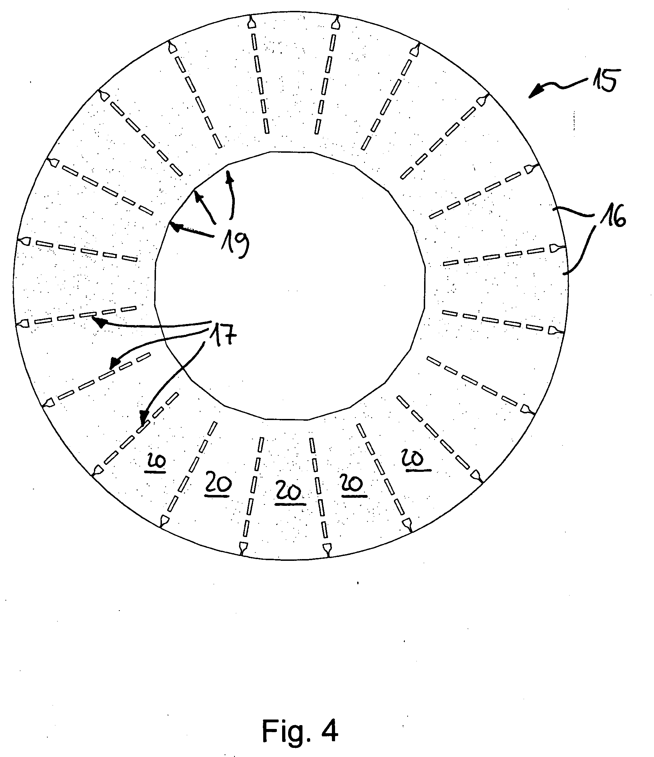

In Fig. 3 und 4 ist erkennbar, dass die Deckbleche eine der Anzahl der Magnetpole entsprechende Anzahl Perforierungen 17 haben, die sich radial zur Rotationsachse 3 erstrecken und in Umfangsrichtung durch unperforierte Bereiche voneinander beabstandet sind. Die Perforierungen 17 haben jeweils mehrere, in radialer Richtung hintereinander angeordnete Schlitze, die mit ihrer Längserstreckung etwa in radialer Richtung verlaufen. Die Perforierungen 17 sind jeweils zwischen in Umfangsrichtung zueinander benachbarten Permanentmagneten 12 vorgesehen. Durch die Perforierungen 17 sind die Deckbleche 15 in einstückig miteinander verbundene Segmente 20 unterteilt. Die Perforierungen 17 enden jeweils mit Abstand zum inneren Rand der etwa ringscheibenförmigen Deckbleche 15. Dadurch wird eine gute mechanische Verbindung zwischen den Segmenten erreicht. Die Streuverluste nehmen, ausgehend vom Außenrand der Deckbleche 15 entlang der Perforierung und deren geraden Verlängerung zum Innenrand der Deckbleche 15 durch die dort fehlende Perforierung etwas zu. Da bei Nuten mit kontanter Nutbreite im radial inneren Bereich der Statorkerne ein Flussüberschuss entsteht und wegen des kleineren Drehmoment bildenden Hebels, wird diese Streuflusszunahme bewusst in Kauf genommen.

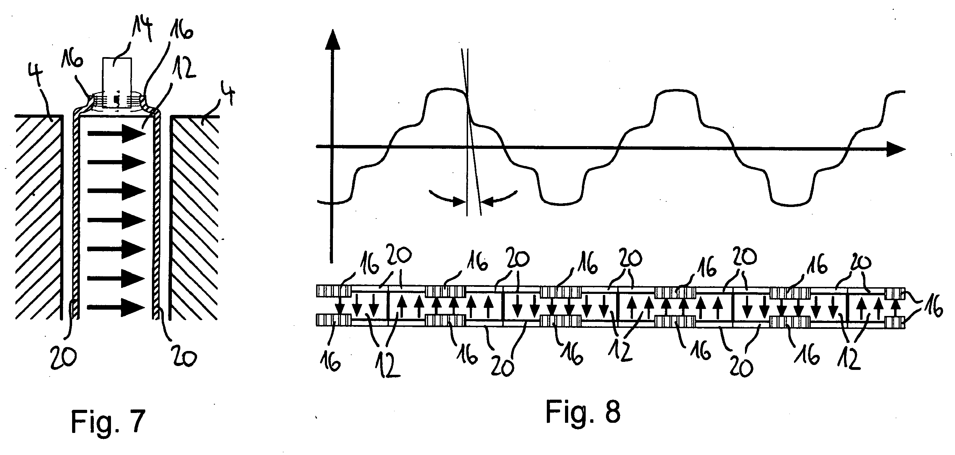

Bei dem Ausführungsbeispiel gemäß Fig. 3 und 7 weisen die einzelnen Zähne 16 in Umfangsrichtung des Deckblechs 15 jeweils eine geringere Breite auf als die Segmente 20, an denen die Zähne 16 angeordnet sind. Dabei sind die einzelnen Zähne 16 in Umfangsrichtung des Deckblechs 15 jeweils etwa mittig zu dem Segment 20 angeordnet. Wie in Fig. 8 erkennbar ist, ergibt sich durch die Zähne 16 bei einer Relativbewegung zwischen dem Primär- und dem Sekundärteil an den Magnetfeldsensoren 14 eine relativ schnelle Änderung des magnetischen Flusses, wenn die Magnetpole an den Magnetfeldsensoren 14 vorbeilaufen.

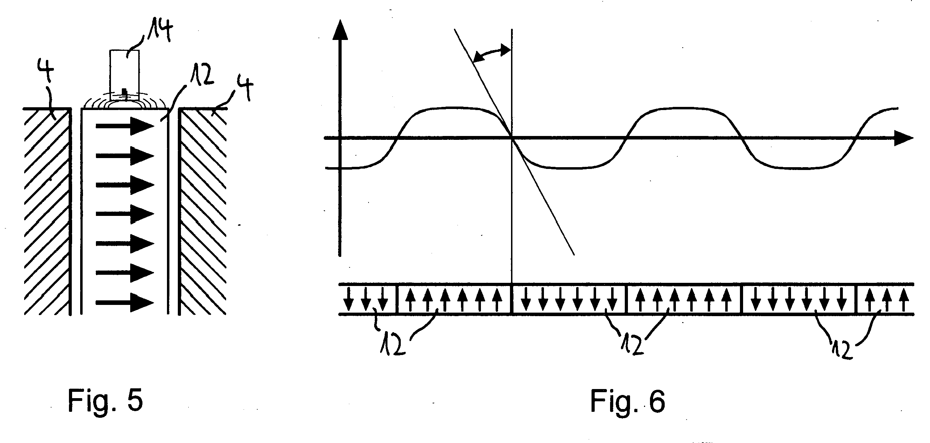

Bei dem in Fig. 5 gezeigten Ausführungsbeispiel hat das Sekundärteil keine Magnetscheibe. Durch einen Vergleich von Fig. 6 mit Fig. 8 ist erkennbar, dass die magnetische Flussdichte bei diesem Ausführungsbeispiel eine kleinere Flankensteilheit aufweist als bei dem die gezahnte Magnetscheibe aufweisenden Sekundärteil.

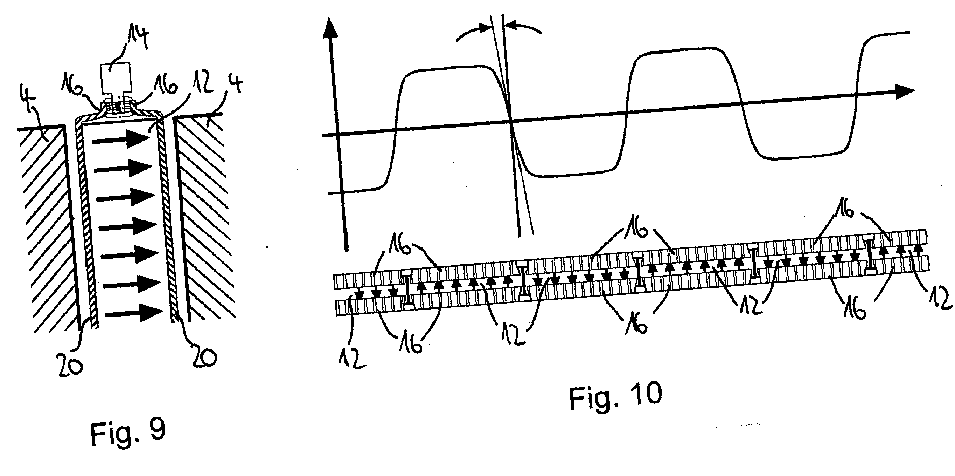

Bei dem in Fig. 4 und 9 gezeigten Ausführungsbeispiel erstrecken sich die einzelnen Zähne 16 in Umfangsrichtung des Deckblechs 15 jeweils über die gesamte Breite des Segments 20, an dem sie angeordnet sind. Dadurch ergibt sich an den Magnetfeldsensoren 14 eine noch größere Flankensteilheit der magnetischen Flussdichte. Durch einen Vergleich von Fig. 8 mit Fig. 10 ist erkennbar, dass durch die größere Breite der Sensoren im Bereich der Polübergänge ein größerer Signalhub in der magnetischen Flussdichte auftritt. Die Magnetfeldsensoren 14 können dadurch eine höhere Schaltschwelle als bei den Ausführungsbeispielen in Fig. 3, 5 und 7 aufweisen. Erwähnt werden soll noch, dass die Magnetfeldsensoren 14 bei dem Ausführungsbeispiel gemäß Fig. 9 in einem zwischen die Zähne 16 eingreifenden Bereich eine geringere Wandstärke aufweisen als in einem radial außerhalb der Zähne 16 liegenden Bereich. Zwischen dem die geringere Wandstärke aufweisenden Bereich und dem Bereich mit der großen Wandstärke haben die Gehäuse der Magnetfeldsensoren 14 beidseits eine Stufe oder einen Absatz.

Die beiden Deckbleche 15 sind baugleich ausgebildet und bestehen aus einer weichmagnetischen Legierung, deren Sättigungsflussdichte zwischen 10% und 30% über der Betriebsflussdichte der Permanentmagnete 12 liegt. Die Deckbleche 15 bestehen aus einer Nickeleisenlegierung, die eine Sättigungsflussdichte von etwa 1,1 T hat. Die Remanenz der aus einer gesinterten Neodym-Eisen-Bor-Legierung bestehenden Permanentmagnete 12 beträgt etwa 1,3 T und ihr Arbeitspunkt liegt etwa bei 0,95 T. Die zwischen den Schlitzen der Perforierungen 17 vorgesehenen schmalen Stege gehen somit bereits bei 1,1T in Sättigung, so dass die Streuverluste gering sind. Dank der hohen magnetischen Permeabilität der Deckbleche 15 im Bereich der Arbeitsflussdichte bleibt der magnetische Widerstand des Hauptfelds klein und die Luftspaltflussdichte hoch, was ein hohe Leistungsdichte der Scheibenläufers ermöglicht.

Die Wandstärke der als Biegestanzteile hergestellten Deckbleche 15 beträgt etwa 0,1 mm. Im Wurzelbereich der Zähne 16 kann gegebenenfalls jeweils mindestens ein kleiner, in der Zeichnung nicht näher dargestellter Schlitz vorgesehen sein, um Wirbelströme, die durch die Wicklung 5 in den Zähnen 16 induziert werden, abzuschwächen.

Die Permanentmagnete sind zwischen den Deckblechen 15 in eine verfestigte Vergussmasse eingebettet, die in die Perforierungen 17 formschlüssig eingreift.

Bei dem in Fig. 3 gezeigten Ausführungsbeispiel weisen die Deckbleche 15 an ihrem radial innen angeordneten Rand eine Verzahnung 19 auf, die mit einer am Außenumfang des Nabenkörpers 10 vorgesehenen, in der Zeichnung nicht näher dargestellten Profilierung zusammenwirkt. Mit Hilfe der Profilierung und der Verzahnung 19 ist der aus den Magnetscheiben 11 und den Deckblechen 15 gebildete Rotor drehfest mit dem Nabenkörper 10 verbunden.

### Bezugszeichenliste

- 1: elektrische Maschine
- 2: Gleit- oder Wälzlager
- 3: Rotationsachse
- 4: Statorkern
- 5: Wicklung
- 6: erstes Gehäuseteil
- 7: zweites Gehäuseteil
- 8: Steg
- 9: Welle
- 10: Nabenkörper
- 11: Magnetscheibe
- 12: Permanentmagnet
- 13: Luftspalt
- 14: Magnetfeldsensor
- 15: Deckblech
- 16: Zahn
- 17: Perforierung
- 18: Vergussmasse
- 19: Verzahnung
- 20: Segment

## Patentansprüche

1. Elektrische Maschine (1), die als Scheibenläufer mit einem relativ zu einem Primärteil um eine Rotationsachse (3) verdrehbar gelagerten Sekundärteil ausgebildet ist, wobei das Sekundärteil eine Magnetscheibe (11) aufweist, die an ihren axialen Stirnseiten eine in Umfangsrichtung verlaufende Abfolge von abwechselnd in zueinander entgegengesetzte Richtungen magnetisierten permanentmagnetischen Magnetpolen aufweist, die über mindestens einen axial zwischen dem Primärteil und dem Sekundärteil angeordneten Luftspalt (13) mit einer am Primärteil vorgesehenen Wicklung (5) magnetisch zusammenwirken, und mit einer Lagemesseinrichtung zur Erfassung der Lage des Sekundärteils relativ zum Primärteil, wobei die Lagemesseinrichtung mindestens einen an dem Primärteil angeordneten Magnetfeldsensor (14) zum Detektieren der Magnetpole aufweist, **dadurch gekennzeichnet, dass** der mindestens eine Magnetfeldsensor (14) in einem radial außerhalb der Magnetscheibe (11) befindlichen Bereich ortsfest zum Stator angeordnet ist.

2. Elektrische Maschine (1) nach Anspruch 1, **dadurch gekennzeichnet, dass** das Sekundärteil beidseits der Magnetscheibe (11) an deren axialen Stirnseiten magnetisch leitfähige Deckbleche (15) auf der Magnetscheibe (11) aufweist, die radial über den Außenumfang der Magnetscheibe (11) vorstehen.

3. Elektrische Maschine (1) nach Anspruch 1 oder 2, **dadurch gekennzeichnet, dass** magnetisch leitfähige Deckbleche (15) auf radial über den Außenumfang der Magnetscheibe (11) vorstehende, jeweils einem Magnetpol zugeordnete Zähne (16) bilden, die beim Verdrehen des Sekundärteils relativ zu dem Primärteil axial beidseits an dem mindestens einen Magnetfeldsensor (14) vorbeilaufen und jeweils zwei paarweise einander zugeordnete Zähne (16) unterschiedlicher Deckbleche (15) in axialer Richtung hintereinander angeordnet sind.

4. Elektrische Maschine (1) nach einem der Ansprüche 1 bis 3, **dadurch gekennzeichnet, dass** mindestens ein Deckblech (15) zumindest im Bereich der Zähne (16) einen von einer Ebene abweichenden Verlauf aufweist, der derart gewählt ist, dass die lichte Weite zwischen den paarweise einander zugeordneten Zähnen (16) kleiner ist als der Abstand der Deckbleche (15) im Bereich der Magnetscheibe (11).

5. Elektrische Maschine (1) nach einem der Ansprüche 1 bis 4, **dadurch gekennzeichnet, dass** die Deckbleche (15) im Übergangsbereich zwischen zwei zueinander benachbarten ungleichnamigen Magnetpolen der Magnetscheibe (11) mindestens eine Unterbrechung und/oder Reduzierung ihrer Wandstärke aufweisen.

6. Elektrische Maschine (1) nach einem der Ansprüche 1 bis 5, **dadurch gekennzeichnet, dass** die Unterbrechung(en) und/oder Reduzierung(en) derart angeordnet sind, dass sie die Deckbleche (15) in Segmente (20) unterteilen.

7. Elektrische Maschine (1) nach einem der Ansprüche 1 bis 6, **dadurch gekennzeichnet, dass** die Unterbrechung als sich in radialer Richtung erstreckender Schlitz und/oder als in radialer Richtung verlaufende Perforierung (17) ausgebildet ist.

8. Elektrische Maschine (1) nach einem der Ansprüche 1 bis 7, **dadurch gekennzeichnet, dass** sich zumindest ein Zahn (16) in Umfangsrichtung des Deckblechs (15) über die gesamte Breite des ihm zugeordneten Segments (20) erstreckt.

9. Elektrische Maschine (1) nach einem der Ansprüche 1 bis 7, **dadurch gekennzeichnet, dass** zumindest ein Zahn (16) in Umfangsrichtung des Deckblechs (15) eine geringere Breite aufweist als das ihm zugeordnete Segment (20), und dass dieser Zahn (16) in Umfangsrichtung vorzugsweise mittig an dem Segment (20) angeordnet ist.

10. Elektrische Maschine (1) nach einem der Ansprüche 1 bis 9, **dadurch gekennzeichnet, dass** die Deckbleche (15) aus einer weichmagnetischen Legierung bestehen, deren Sättigungsflussdichte zwischen 10% und 30% über der Betriebsflussdichte der Magnetscheibe (11) liegt.

11. Elektrische Maschine (1) nach einem der Ansprüche 1 bis 10, **dadurch gekennzeichnet, dass** die Magnetscheibe (11) Permanentmagnete (12) aufweist, die in eine Vergussmasse (18) eingebettet sind, und dass die mindestens eine Unterbrechung zumindest bereichsweise mit der Vergussmasse (18) befüllt ist.

12. Elektrische Maschine (1) nach einem der Ansprüche 1 bis 11, **dadurch gekennzeichnet, dass** die Magnetscheibe (11) als Ringscheibe ausgebildet ist, die um ein vorzugsweise als Welle (9) oder Nabenkörper (10) ausgebildetes Trägerteil herum angeordnet ist, und dass mindestens eines der Deckbleche (15) drehfest mit der Magnetscheibe (11) und dem Trägerteil verbunden ist.

13. Elektrische Maschine (1) nach einem der Ansprüche 1 bis 12, **dadurch gekennzeichnet, dass** mindestens eines der Deckbleche (15) als Ringscheibe ausgebildet ist, die an ihrem Innenrand eine Verzahnung (19) aufweist, und dass an dem Trägerteil eine mit der Verzahnung im Sinne einer drehfesten Verbindung zusammenwirkende Profilierung vorgesehen ist.

14. Elektrische Maschine (1) nach einem der Ansprüche 1 bis 13, **dadurch gekennzeichnet, dass** die beidseits der Magnetscheibe (11) angeordneten Deckbleche (15) baugleich ausgebildet sind.

15. Elektrische Maschine (1) nach einem der Ansprüche 1 bis 14, **dadurch gekennzeichnet, dass** die Wandstärke der Deckbleche (15) kleiner oder gleich 0,2 mm, insbesondere kleiner oder gleich 0,15 mm und bevorzugt kleiner oder gleich 0,1 mm ist.

16. Elektrische Maschine (1) nach einem der Ansprüche 1 bis 15, **dadurch gekennzeichnet, dass** der Magnetfeldsensor (14) eine parallel zur Rotationsachse (3) gerichtete Magnetfeldkomponente misst.
